# EUROPÄISCHE PATENTSCHRIFT

(11) **EP 0 681 009 B1**
(45) Veröffentlichungstag und Bekanntmachung des Hinweises auf die Patenterteilung: **16.09.1998**
(21) Anmeldenummer: 95106057.3
(22) Anmeldetag: 22.04.1995
(51) Int. Cl.: C09C 1/00, C09D 11/00, B41M 3/14

(54) **Verwendung von ilmenithaltigen Interferenzpigmenten zur Herstellung von fälschungssicheren Wertschriften und Verpackungen**
Use of ilmenite containing interference pigments for manufacturing anti-counterfeiting valuable documents and packings
Utilisation de pigments à couleurs d'interférences contenant de l'ilménite pour la fabrication de documents de valeur et d'emballage infalsifiables

(30) Priorität: 02.05.1994 DE 4415357
(43) Veröffentlichungstag der Anmeldung: 08.11.1995
(73) Patentinhaber: BASF AKTIENGESELLSCHAFT, 67056 Ludwigshafen (DE)
(72) Erfinder: Schmid, Raimund, Dr., D-67435 Neustadt (DE); Mronga, Norbert, Dr., D-69221 Dossenheim (DE); Kaliba, Claus, Dr., D-67141 Neuhofen (DE); Ostertag, Werner, Dr., D-67269 Grünstadt (DE); Schmidt, Helmut, D-67574 Osthofen (DE)

(56) Entgegenhaltungen:
- EP-A- 0 246 523
- WO-A-93/12182
- DE-A- 4 241 753
- DATABASE WPI Week 9431 Derwent Publications Ltd., London, GB; AN 94-253019 XP002006496 & JP-A-06 184 461 (TITANIUM KOGYO) , 5.Juli 1994

## Beschreibung

Die vorliegende Erfindung betrifft die Verwendung von speziellen Interferenzpigmenten auf der Basis von mehrfach beschichteten plättchenförmigen silikatischen Substraten mit
A) einer ersten, im wesentlichen aus Titandioxid bestehenden Schicht,
B) einer zweiten, nichtselektiv absorbierenden, semitransparenten Schicht, die im wesentlichen aus Ilmenit besteht, und gewünschtenfalls
C) einer dritten Schicht aus farblosem oder selektiv absorbierendem Metalloxid
zur Herstellung von fälschungssicheren Wertschriften und Verpakkungen.

Außerdem betrifft die Erfindung ein Verfahren zur Herstellung von mit einer ilmenithaltigen Schicht belegten Interferenzpigmenten durch Gasphasenbeschichtung.

Die Herstellung von fälschungssicheren Wertschriften, z.B. von Papiergeld, Briefmarken, Schecks, Steuermarken, Scheckkarten, Bahn- oder Flugtickets, Kreditkarten, Telefonkarten, Lotterielosen, Aktien, Geschenk-Zertifikaten, Ausweisen oder Identifikationskarten, ist angesichts der Einführung immer leistungsfähigerer Farbkopierer und der damit zusammenhängenden Fälschungsmöglichkeiten von zunehmender Bedeutung. Das gleiche gilt für wertvolle Verpackungen.

Der Wunsch nach fälschungssicheren Wertschriften oder Verpackungen wurde in der Vergangenheit auf vielfältige Weise verfolgt. Beispielsweise wurden Magnetpigmente oder Fluoreszenzfarbstoffe zur Charakterisierung der Originale angewandt. Diese Kennzeichnungen haben aber den Nachteil, daß ihr Vorhandensein nicht unmittelbar visuell, sondern nur mit Hilfe entsprechender mehr oder weniger aufwendiger Leseapparate erkennbar ist. Das gleiche gilt für Kennzeichnungen mit IR- oder UV-Farbstoffen oder -Pigmenten.

Von größerem Interesse sind daher Kennzeichnungen, die ohne Hilfsmittel mit bloßem Auge ausreichend sicher erkennbar sind und leicht eine Unterscheidung des Originals von der Kopie ermöglichen. In der Praxis sind hier Wasserzeichen, silbern glänzende Metallstreifen, die in der Kopie aufgrund der Totalreflexion des Lichtes schwarz wiedergegeben werden, oder Hologramme angewendet worden. Der Nachteil dieser Kennzeichnungen ist aber, daß sie sich leicht imitieren lassen oder im Falle der Hologramme teuer und anfällig für Beschädigungen sind.

In der jüngsten Vergangenheit wurden darüber hinaus zur besonderen Kennzeichnung der Echtheit auch einfache Interferenzpigmente verwendet. Bei direkter Aufsicht sind die über hellem Untergrund applizierten Interferenzpigmente für den Betrachter aber praktisch nicht wahrnehmbar, er kann das exakte Feld der Kennzeichnung nur mit Schwierigkeiten ausmachen und übersieht die Kennzeichnung deshalb leicht.

Interferenzpigmente im herkömmlichen Sinn (beispielsweise in der US-A-3 087 827 beschrieben) sind plättchenförmige Glanzpigmente, die vorwiegend aus einem Glimmersubstrat bestehen, das mit einer Schicht aus hochbrechendem Material, z.B. Rutil, Zirkondioxid oder Zinndioxid, belegt ist, wobei die Schicht eine bestimmte Dicke aufweist (in der Regel >50 nm), so daß "Farben dünner Plättchen" entstehen. Interferenzpigmente müssen ausgerichtet appliziert werden. Die Intensität des Farbeindrucks von Interferenzfarbpigmenten ist, verglichen mit derjenigen von streuenden Farbpigmenten, jedoch gering. Sie zeigen ein winkelabhängiges Reflexionsmaximum. Derartige Interferenzpigmente werden seit vielen Jahren in der Kosmetik und im Kunststoffbereich angewandt.

Bekannt geworden sind außerdem Mehrschichtpigmente, die einen deutlichen, winkelabhängigen Farbwechsel zeigen und durch Pulverisierung von vom Substrat abgelösten dünnen Mehrschichtfilmen, sogenannter Thin Film Security Devices, hergestellt werden (US-A-4 434 010, US-A-5 059 245). Das optische Prinzip solcher Pigmente beruht auf dem des Transmissionsfilters. Die Schichtenfolge der Pigmente umfaßt im typischen Fall 5 Schichten: eine niedrigbrechende dielektrische Schicht, z.B. Siliciumdioxid, eine semitransparente reflektierende Metallschicht, z.B. aus Titan, Aluminium oder Chrom, eine niedrigbrechende dielektrische Schicht, z.B. aus Siliciumdioxid, eine hochreflektierende opake Metallschicht, z.B. Aluminium oder Titan, eine niedrigbrechende dielektrische Schicht, z.B. Siliciumdioxid, eine semitransparente reflektierende Metallschicht, z.B. Aluminium, Chrom oder Titan, und eine niedrigbrechende dielektrische Schicht, z.B. Siliciumdioxid.

Derartige Pigmente haben jedoch den Nachteil, daß sie teuer und nicht in großen Mengen herstellbar sind sowie keine Alkalistabilität und meist nicht die gewünschte Säureechtheit aufweisen.

In der nicht vorveröffentlichten DE-A 42 41 753 werden Interferenzpigmente für fälschungssichere Wertschriften beschrieben, die mindestens eine farblose, hochbrechende Metalloxidschicht und eine nichtselektiv absorbierende Metall- und/oder Metalloxid-oder Kohlenstoffschicht, jedoch keine ilmenithaltige Schicht aufweisen.

Der Erfindung lag die Aufgabe zugrunde, weitere Interferenzpigmente für das Anwendungsgebiet der fälschungssicheren Markierung von Wertschriften bereitzustellen. Gleichzeitig bestand auch die Aufgabe, ein vorteilhaftes Verfahren zur Herstellung solcher Pigmente zu entwickeln.

Demgemäß wurde die Verwendung von Interferenzpigmenten auf der Basis von mehrfach beschichteten plättchenförmigen silikatischen Substraten mit
A) einer ersten, im wesentlichen aus Titandioxid bestehenden Schicht,
B) einer zweiten, nichtselektiv absorbierenden, semitransparenten Schicht, die im wesentlichen aus Ilmenit besteht, und gewünschtenfalls
C) einer dritten Schicht aus farblosem oder selektiv absorbierendem Metalloxid
zur Herstellung von fälschungssicheren, insbesondere schwer oder nicht kopierbaren, Wertschriften und Verpackungen gefunden.

Außerdem wurde eine bevorzugte Verwendung der Interferenzpigmente gefunden, welche dadurch gekennzeichnet ist, daß man sie in Kombination mit streuenden Farbpigmenten oder mit streuenden Weißpigmenten einsetzt.

Weiterhin wurde ein Verfahren zur Herstellung von mit einer ilmenithaltigen Schicht belegten Interferenzpigmenten durch Gasphasenbeschichtung gefunden, welches dadurch gekennzeichnet ist, daß man auf die bereits mit einer im wesentlichen aus Titandioxid bestehenden Schicht belegten Substratteilchen zunächst durch inerte Zersetzung von Eisencarbonyl eine im wesentlichen aus Eisen bestehende Schicht und dann durch Zersetzung von Eisencarbonyl in Gegenwart von Wasserdampf eine im wesentlichen aus Magnetit bestehende Schicht aufbringt und anschließend die so beschichteten Substratteilchen unter Inertgas auf 700 bis 1000°C erhitzt, wobei sich Eisen, Magnetit und Titandioxid zu Ilmenit umsetzen.

Für die erfindungsgemäße Verwendung eignen sich mit Ilmenit beschichtete Interferenzpigmente, die nach dem in der EP-A-246 523 beschriebenen Verfahren hergestellt sind, und besonders vorteilhaft auch solche, die nach dem erfindungsgemäßen Herstellungsverfahren erhalten werden.

Bei dem Verfahren der EP-A-246 523 werden zu einer wäßrigen Suspension von TiO₂-beschichteten Glimmerteilchen gleichzeitig eine Eisen(II)salzlösung und eine Oxidationsmittellösung getropft, wobei der pH-Wert und die Temperatur konstant gehalten werden müssen. Die auf diese Weise mit einer Fe₂O₃-Schicht belegten und dann getrockneten Substratteilchen werden anschließend in einer reduzierenden, wasserstoffhaltigen Atmosphäre erhitzt, wobei auf den Substratteilchen Ilmenit gebildet wird.

Die auf diese Weise durch Reduktion von Eisen(II)oxid mit Wasserstoff hergestellten, ilmenitbeschichteten Interferenzpigmente eignen sich insbesondere für den violett bis blauen Farbtonbereich, da bei ihrer Herstellung nicht immer ein reduzierender Angriff der TiO₂-Schicht durch den Wasserstoff vermieden werden kann, so daß sich insbesondere bei dünneren Ilmenitschichten ein Blauschimmer bemerkbar machen kann.

Geeignete plättchenförmige, silikatische Substrate für die erfindungsgemäß zu verwendenden Interferenzpigmente sind insbesondere helle oder weiße Glimmer, wobei Schuppen von vorzugsweise naß vermahlenem Muskovit besonders bevorzugt sind. Selbstverständlich sind auch andere natürliche Glimmer, wie Phlogopit oder Biotit, künstliche Glimmer, Talk- und Glasschuppen geeignet.

Die Substratteilchen sind mit einer ersten Schicht (A), die im wesentlichen aus Titandioxid besteht und als untergeordnete Bestandteile (< 5 Gew.-%) weitere, vorzugsweise farblose, Metalloxide wie Zirkondioxid und Zinndioxid enthalten kann, belegt.

Diese einfach beschichteten Pigmente sind allgemein bekannt und beispielsweise in den DE-C-14 67 468, DE-A-32 37 264 oder DE-A-20 09 566 beschrieben. Titandioxidbeschichtete Glimmerplättchen sind auch unter dem Namen Iriodin^{®} (E. Merck, Darmstadt), Flonac^{®} (Kemira Oy, Pori, Finnland) oder Mearlin^{®} (Mearl Corporation, Ossining, New York) im Handel.

Die Dicke der TiO₂-Schicht (A) bestimmt den Farbton und beträgt je nach der gewünschten Interferenzfarbe in der Regel 20 bis 200 nm, vorzugsweise 40 bis 160 nm.

Die erfindungsgemäße nichtselektiv absorbierende und im wesentlichen aus Ilmenit (FeTiO₃) bestehende Schicht (B) sollte semitransparent sein, d.h. Schichtdicken von im allgemeinen 1 bis 100 nm, bevorzugt 5 bis 50 nm aufweisen.

Das entspricht einem Eisengehalt des Interferenzpigments von in der Regel 0,1 bis 20 Gew.-%.

Im Grenzbereich der einzelnen Schichten kann selbstverständlich eine zumindest partielle Durchdringung erfolgen, so daß nicht immer scharf getrennte Schichten vorliegen.

Interferenzpigmente mit einer dünnen Schicht (B) (etwa 1 bis 25 nm; bei einer BET-Oberfläche des Pigments von 7-8 m²/g also einem Eisengehalt des Pigments von im allgemeinen 0,1 bis 2 Gew.-%) weisen eine pastelltonähnliche Körperfarbe auf. Sie sind noch sehr transparent, aber z.B. auf weißem Untergrund schon deutlich sichtbar. Unter ihrer Verwendung hergestellte Kennzeichnungen zeigen im Glanzwinkel eine intensive Interferenzfarbe. Außerhalb des Glanzwinkels sind die Markierungen grau mit einem schwachen, zum reflektierten Licht komplementären Farbstich.

Bei einer Dicke der Schicht (B) von etwa 25 bis 50 nm (bei einer BET-Oberfläche des Pigments von 7-8 m²/g also einem Eisengehalt von in der Regel 2 bis 8 Gew.-%) haben die nur noch leicht transparenten Interferenzpigmente eine kräftige Körperfarbe, die weitgehend mit der Interferenzfarbe übereinstimmt. Mit ihnen erzeugte Kennzeichnungen zeigen im Glanzwinkel eine noch intensivere Interferenzfarbe und sind außerhalb des Glanzwinkels schwarz.

Ist die Schicht (B) dicker als 50 nm, so liegen im wesentlichen schwarze Glanzpigmente vor, die auf Papier appliziert, nur noch einen schwachen Farbschimmer zeigen.

Bei dem erfindungsgemäßen Verfahren zur Herstellung der Interferenzpigmente bringt man die ilmenithaltige Schicht (B) dadurch auf die mit (A) belegten Substratteilchen auf, daß man zunächst eine Schicht aus metallischem Eisen und dann eine Schicht aus Magnetit auf den Substratteilchen abscheidet und durch anschließendes Erhitzen die Umsetzung von Eisen, Magnetit und Titandioxid zu Ilmenit bewirkt.

Die eisen- und die magnetithaltige Schicht werden dabei durch Gasphasenbeschichtung (chemical vapor deposition, CVD) aufgebracht, wofür vorteilhaft ein beheizbarer Wirbelschichtreaktor, wie er beispielsweise in der DE-A-41 41 069 beschrieben ist, verwendet wird, in dem die mit (A) beschichteten Substratteilchen mit einem Inertgas wie Stickstoff fluidisiert und auf die Reaktionstemperatur von 150 bis 350°C, bevorzugt 170 bis 220°C, erhitzt werden. Das in einem vorgeschalteten Verdampfergefäß unter Verwendung eines inerten Trägergases wie Stickstoff verdampfte Eisencarbonyl (insbesondere Eisenpentacarbonyl) sowie der einem Teil des Wirbelgases zur Bildung von Magnetit beigemischte Wasserdampf werden dann über getrennte Düsen eingetragen.

Zur Erzeugung der Eisenschicht wird Eisenpentacarbonyl unter inerten Bedingungen (in Gegenwart von Stickstoff) zersetzt, zur Abscheidung von Magnetit erfolgt die Zersetzung von Eisenpentacarbonyl in Gegenwart von Wasserdampf.

Diese Beschichtungen können vorteilhaft direkt aufeinanderfolgend vorgenommen werden, indem die Vorlage für das Eisencarbonyl für die Magnetitbeschichtung wieder gefüllt wird und dem Wirbelgas Wasserdampf zugemischt wird.

Um eine möglichst vollständige Umsetzung zu Ilmenit zu erreichen, empfiehlt es sich, ein Molverhältnis von metallischem Eisen zu Magnetit von in der Regel 0,5:1 bis 1,5:1, bevorzugt etwa 1:1 einzustellen.

Nach abgeschlossener Beschichtung kühlt man den Reaktor ab und mischt den Wirbelgasen zur kontrollierten Oxidation eventuell vorhandener pyrophorer Beschichtungsanteile zweckmäßigerweise etwas Luft zu.

Die anschließende Temperaturbehandlung zur Bildung der ilmenithaltigen Beschichtung nimmt man vorzugsweise in einem inertisierbaren Ofen vor, in dem man das Pigment unter einem inerten Schutzgas wie Stickstoff auf eine Temperatur von in der Regel 700 bis 1000°C, vorzugsweise 800 bis 1000°C, erhitzt.

Wurde für die Gasphasenbeschichtung ein für solche hohen Temperaturen ausgelegter Wirbelschichtreaktor verwendet, so kann die Temperphase selbstverständlich ebenfalls in diesem Reaktor erfolgen.

Die Dauer der Temperaturbehandlung hängt naturgemäß von der Dicke der Ilmenitschicht (B) ab und beträgt im allgemeinen 2 bis 10 h.

Die Vollständigkeit der Umsetzung kann röntgenographisch durch Pulverdiffraktometrie kontrolliert werden.

Der besondere Vorteil des erfindungsgemäßen Herstellungsverfahrens liegt darin, daß die abgeschiedenen Filme aus besonders feinteiligen Kristalliten bestehen. So werden bei der Schicht (B) in der Regel sehr dicht gepackte Kristallite mit einer Teilchengröße von < 100 nm beobachtet. Es werden daher stark glänzende, für den gesamten Farbtonbereich geeignete Pigmente erhalten.

Die erfindungsgemäß zu verwendenden Interferenzpigmente können noch eine dritte Schicht (C) aus farblosem oder selektiv absorbierendem Metalloxid aufweisen. Geeignete Metalloxide für diese Schicht sind z.B. Titan-, Zirkon-, Zinn-, Chrom-, Eisen-, Aluminium-, Silicium- oder Zinkoxid oder deren Mischungen. Mit dieser Schicht kann die Interferenzfarbe des Pigments weiter verändert werden und bei Anwendung farbiger Oxide auch die Körperfarbe zusätzlich modifiziert werden.

Bevorzugt kommen jedoch solche Interferenzpigmente zur Anwendung, die nur zweifach beschichtet sind, also nur die Schichten (A) und (B) aufweisen.

Die erfindungsgemäß zu verwendenden Interferenzpigmente haben vorzugsweise eine mittlere Partikelgröße (bezogen auf den größten Partikeldurchmesser) von 5 bis 30 µm.

Die erfindungsgemäßen ilmenitbeschichteten Interferenzpigmente eignen sich nicht zuletzt auch wegen ihrer Säurestabilität hervorragend für den Sicherheitsdruck, d.h. zur Herstellung von fälschungssicheren Wertschriften.

Besonders vorteilhaft werden sie dabei in Kombination mit streuenden Farbpigmenten oder streuenden Weißpigmenten eingesetzt.

Unter streuenden Pigmenten werden pigmentäre Farbmittel verstanden, deren Wirkungsmechanismus hauptsächlich auf selektiver Absorption oder diffuser Streuung beruht. Als streuende Farbpigmente können dabei auch mit transparenten Farbmitteln überfärbte streuende Weißpigmente dienen.

Vorzugsweise weisen die zur Anwendung gelangenden streuenden Farbpigmente die Komplementärfarbe zur Reflexionsfarbe der Interferenzpigmente auf.

Geeignete streuende Farbpigmente sind sowohl anorganische wie auch organische Pigmente, die eine Brechzahl n, die größer als 1,65 ist, aufweisen.

Beispiele für anorganische Pigmente sind Eisenoxide, Bismutvanadat, farbige Spinelle oder Nickeltitangelb.

Beispiele für organische Pigmente sind Monoazopigmente (z.B. Produkte, die sich von Acetessigarylidderivaten oder von β-Naphtholderivaten ableiten), verlackte Monoazofarbstoffe, wie verlackte β-Hydroxynaphthoesäurefarbstoffe, Disazopigmente, kondensierte Disazopigmente, Isoindolinderivate, Derivate der Naphthalin- oder Perylentetracarbonsäure, Anthrachinonpigmente, Thioindigoderivate, Azomethinderivate, Chinacridone, Dioxazine, Pyrazolochinazolone, Phthalocyaninpigmente und verlackte basische Farbstoffe, wie verlackte Triarylmethanfarbstoffe, sofern ihre Brechzahl n größer als 1,65 ist. Ansonsten sind diese Pigmente zur Überfärbung streuender Weißpigmente geeignet.

Als geeignetes streuendes Weißpigment ist insbesondere Titandioxid zu nennen.

Die erfindungsgemäße Verwendung der Interferenzpigmente hat für den visuell Wahrnehmenden folgende Vorteile: Das pigmentierte Markierungsfeld läßt sich unschwer unter jedem Winkel, auch über transparentem und hellem Untergrund, erkennen, da die reflektierte Interferenzfarbe durch die erfindungsgemäße Beschichtung wesentlich deutlicher und viel intensiver wahrgenommen werden kann. Außerdem entstehen beim Kopieren, selbst mit leistungsstarken Farbkopierern, Fehlfarben.

Kopiert man beispielsweise eine mit einem violetten Interferenzpigment und einem streuendem Weißpigment markierte Wertschrift (Aufbau des Interferenzpigmentes: GlimmersubstratRutil/Ilmenit; streuendes Weißpigment: Rutil), so wird das violett reflektierende Interferenzpigment über weißem streuendem Untergrund mit der Fehlfarbe Gelb wiedergegeben. Wird der Untergrund anstelle von Titandioxid mit Eisenrot, Kobaltspinell-Blau oder mit halogeniertem Phthalocyanin pigmentiert, so entstehen auf der Farbkopie bräunliche, grünliche oder gelbgrüne Fehlfarben. Das gleiche Ergebnis wird erzielt, wenn das streuende Weißpigment mit Farbstoffen, z.B. Papierfarbstoffen, rot, blau oder gelb überfärbt wird.

Besonders vorteilhaft ist die Kombination der erfindungsgemäßen Interferenzpigmente mit streuenden Farbpigmenten, welche die Komplementärfarbe zur Reflexionsfarbe der Interferenzpigmente aufweisen. Wird beispielsweise mit einem blauvioletten Interferenzpigment ein Muster auf einen mit gelb streuendem Pigment eingefärbten Untergrund aufgebracht, so verschwindet dieses auf der Farbkopie, da es mit grünlichgelber Fehlfarbe wiedergegeben wird.

Um die oben beschriebenen Effekte zu nutzen, darf die schwarze absorbierende Schicht (B) der Interferenzpigmente nicht zu dick sein. Sie muß für einfallendes Licht zumindest teilweise transparent sein.

Interferenzpigmente mit dickeren (etwa 25 bis 500 nm dicken), einfallendes Licht stärker absorbierenden Schichten (B) sind aufgrund ihres besseren Deckvermögens in der Farbkopie auch auf farbigem Untergrund noch zu erkennen. Da ihre rote, blaue oder grüne Reflexionsfarbe mit der Fehlfarbe Schwarz wiedergegeben wird, ist der vor Fälschung schützende Effekt bei diesen Pigmenten insbesondere in Kombination mit streuenden Weißpigmenten auffällig.

Die genannten Effekte sind besonders auffallend, sichern also am besten vor Fälschung, wenn die Interferenzpigmente bei der Herstellung der Wertschriften oder Verpackungen ganz oben zu liegen kommen, d.h. wenn auf einem mit streuendem Farb- oder Weißpigment bedruckten Untergrund gedruckt wird, sind aber durchaus, wenn auch nicht so deutlich, feststellen, wenn Interferenzpigment und streuendes Farb- oder Weißpigment gemischt und dann zusammen verdruckt werden.

Die Applikation der erfindungsgemäßen Interferenzpigmente erfolgt zweckmäßigerweise über die Herstellung einer Druckfarbe und anschließendes Verdrucken mit Hilfe industrieüblicher Druckverfahren, z.B. mittels Siebdruck, Tiefdruck, Bronzierdruck, Flexodruck oder Offsetdruck.

Besonders vorteilhaft lassen sich die Pigmente auch in die Lacke einarbeiten, die zum Überlackieren von Drucken verwendet werden.

Schließlich sei als weitere vorteilhafte Anwendung auch die Einarbeitung in Kunststoffolien, die gewünschtenfalls auf Papier kaschiert werden, genannt.

### Beispiel

A) Herstellung eines erfindungsgemäßen Interferenzpigments
   In einem zu dem in der DE-A-41 41 069 beschriebenen Reaktor baugleichen Wirbelschichtreaktor (Innendurchmesser 16 cm) wurde 1 kg eines TiO₂-beschichteten Glimmerpigments mit goldener Interferenzfarbe (Iriodin^{®} 9205 Rutil Brillantgelb WR; Merck) unter Verwirbelung mit insgesamt 2000 l/h Stickstoff auf 190°C erhitzt. Aus einer auf 20°C temperierten Vorlage wurden mit einem Teil des Stickstoffstroms (400 l/h) zunächst 79,9 g Eisenpentacarbonyl in etwa 4 h in den Reaktor überführt, die dort zu sich filmartig auf den Substratteilchen abscheidendem Eisen zersetzt wurden. Anschließend wurden, wie oben beschrieben, weitere 239,8 g Fe(CO)₅ und parallel dazu aus einer auf 50°C temperierten Wasservorlage mit einem weiteren Teil des Wirbelgases (300 l/h N₂) Wasserdampf über eine andere Öffnung in etwa 12 h in den Reaktor überführt und dort zu sich ebenfalls filmartig abscheidendem Magnetit umgesetzt.
   Nach abgeschlossener Beschichtung wurde der Reaktor auf Raumtemperatur abgekühlt. Dann wurde den Wirbelgasen etwas Luft zur kontrollierten Oxidation eventuell vorhandener pyrophorer Beschichtungsanteile zugemischt.
   Das so beschichtete Pigment hatte eine rötlich goldene Farbe und einen Eisengehalt von 6,6 Gew.-%.
   Zur Umwandlung in eine Ilmenitbeschichtung wurden 100 g des erhaltenen Pigments dann in einen Quarz-Einhalsrundkolben, der über einen Motor drehbar war, in der Drehachse mit einer Gaszu- und -ableitung versehen war und zur Beheizung von einem zweischaligen Klappofen umschlossen war, überführt und 4 h unter Stickstoff auf 840°C erhitzt.
   Das nach dem Abkühlen erhaltene Interferenzpigment war farblich nahezu unverändert. Im Röntgenpulverdiagramm wurde Ilmenit nachgewiesen.
B) Anwendung
   1) Tiefdruck:
      Das ilmenitbeschichtete Pigment wurde in eine Tiefdruckfarbe überführt. Dazu wurden 10 g des Pigments in 90 g eines handelsüblichen Bindemittels, enthaltend 14,4 Gew.-% Nitrocellulose A400 (66,7 Gew.-% Nitrocellulose, 33,3 Gew.-% Butanol), 3,1 Gew.-% Dioctylphthalat, 20 Gew.-% Ethylacetat, 3 Gew.-% Propylenglykolmonomethylether und 59,5 Gew.-% Ethanol eingerührt.
      Mit dieser Farbe wurde anschließend gestrichenes, weißes, mit TiO₂-beschichtetes Papier im Tiefdruckverfahren bedruckt (Raster 54 1/cm 120°, Ätztiefe 40-45 µm).
      Das aufgedruckte Merkmal zeigte im Glanzwinkel die rotgoldene Interferenzfarbe, außerhalb des Glanzwinkels erschien das Merkmal grau.
      Die Farbkopie zeigte das Merkmal in Schwarz.
   2) Siebdruck:
      Das ilmenitbeschichtete Pigment wurde in eine Siebdruckfarbe überführt. Dazu wurden 7,5 g des Pigments in 92,5 g einer handelsüblichen Bindemittellösung (Zusammensetzung: Copolymerisat auf der Basis von Vinylchlorid und Vinylisobutylether ≙ Laroflex^{®} MP 45/Acetat/Aliphaten) eingerührt.
      Diese Farbe wurde anschließend mit einer handelsüblichen Siebdruckmaschine (Siebmaschenweite 112 µm) auf ein gestrichenes, weißes, TiO₂-beschichtetes Papier in einer Schichtdicke von 45 µm aufgebracht und an der Luft getrocknet.
      Der erhaltene rotgolden reflektierende Druck war nach zwanzigminütigem Eintauchen in 5 gew.-%ige Salzsäure farblich völlig unverändert, während ein zum Vergleich mit dem ungetemperten Pigment (Fe- und Fe₃O₄-Beschichtung) hergestellter Druck nach dieser Zeit vollständig entfärbt war.
   3) Polypropylenfolie:
      Das ilmenitbeschichtete Pigment wurde im Gewichtsverhältnis 1:9 durch Kneten in aufgeschmolzenes Polypropylen eingearbeitet. Anschließend wurde über einen handelsüblichen Extruder eine Folie gezogen.
      Die erhaltene Folie zeigte im Glanzwinkel eine goldene Reflexionsfarbe und erschien im Durchlicht gelb.

## Patentansprüche

1. Verwendung von Interferenzpigmenten auf der Basis von mehrfach beschichteten, plättchenförmigen, silikatischen Substraten mit
A) einer ersten, im wesentlichen aus Titandioxid bestehenden Schicht,
B) einer zweiten, nichtselektiv absorbierenden, semitransparenten Schicht, die im wesentlichen aus Ilmenit besteht, und gewünschtenfalls
C) einer dritten Schicht aus farblosem oder selektiv absorbierendem Metalloxid
zur Herstellung von fälschungssicheren Wertschriften und Verpackungen.

2. Verwendung von Interferenzpigmenten nach Anspruch 1, dadurch gekennzeichnet, daß die zweite Schicht eine Dicke von 1 bis 100 nm aufweist.

3. Verwendung von Interferenzpigmenten nach Anspruch 1 oder 2, dadurch gekennzeichnet, daß das Interferenzpigment 2 Schichten aufweist.

4. Verwendung von Interferenzpigmenten nach den Ansprüchen 1 bis 3, dadurch gekennzeichnet, daß man sie in Kombination mit streuenden Farbpigmenten oder mit streuenden Weißpigmenten einsetzt.

5. Verwendung von Interferenzpigmenten nach Anspruch 4, dadurch gekennzeichnet, daß die streuenden Farbpigmente die Komplementärfarbe zur Reflexionsfarbe der Interferenzpigmente aufweisen.

6. Verfahren zur Herstellung von mit einer ilmenithaltigen Schicht belegten Interferenzpigmenten durch Gasphasenbeschichtung, dadurch gekennzeichnet, daß man auf die bereits mit einer im wesentlichen aus Titandioxid bestehenden Schicht belegten Substratteilchen zunächst durch inerte Zersetzung von Eisencarbonyl eine im wesentlichen aus Eisen bestehende Schicht und dann durch Zersetzung von Eisencarbonyl in Gegenwart von Wasserdampf eine im wesentlichen aus Magnetit bestehende Schicht aufbringt und anschließend die so beschichteten Substratteilchen unter Inertgas auf 700 bis 1000°C erhitzt, wobei sich Eisen, Magnetit und Titandioxid zu Ilmenit umsetzen.

7. Verfahren nach Anspruch 6, dadurch gekennzeichnet, daß das molare Verhältnis vom Eisen zu Magnetit 0,5:1 bis 1,5:1 beträgt.

## Claims

1. The use of interference pigments based on multiply coated platelet-shaped silicatic substrates comprising
A) a first layer consisting essentially of titanium dioxide,
B) a second, nonselectively absorbing, semitransparent layer consisting essentially of ilmenite, and optionally
C) a third layer comprising a colorless or selectively absorbing metal oxide
for preparing forgeryproof documents and packaging.

2. A use as claimed in claim 1, characterized in that the second layer has a thickness from 1 to 100 nm.

3. A use as claimed in claim 1 or 2, characterized in that the interference pigment has 2 layers.

4. A use as claimed in any of claims 1 to 3, characterized in that interference pigments are used in combination with scattering color or white pigments.

5. A use as claimed in claim 4, characterized in that the scattering color pigments are complementary in color to the reflection color of the interference pigments.

6. A process for producing interference pigments coated with an ilmenite-containing layer by chemical vapor deposition, characterized in that it comprises subjecting the substrate particles already coated with a layer consisting essentially of titanium dioxide first to the inert decomposition of iron carbonyl to apply a layer consisting essentially of iron and then to decomposition of iron carbonyl in the presence of water vapor to apply a layer consisting essentially of magnetite and then heating the substrate particles thus coated under an inert gas to 700-1000°C to cause iron, magnetite and titanium dioxide to react to form ilmenite.

7. A process as claimed in claim 6, characterized in that the molar ratio of iron to magnetite ranges from 0.5:1 to 1.5:1.

## Revendications

1. Utilisation de pigments d'interférences à base de substrats silicatés, sous forme de plaquettes, revêtus de plusieurs couches avec
A) une première couche constituée essentiellement de dioxyde de titane,
B) une deuxième couche semitransparente, n'absorbant pas de façon sélective, constituée essentiellement d'ilménite, et éventuellement
C) une troisième couche en oxyde métallique incolore ou absorbant de façon sélective
pour la fabrication de papiers de valeurs et d'emballages infalsifiables.

2. Utilisation de pigments d'interférences selon la revendication 1, caractérisé en ce que le deuxième couche a une épaisseur de 1 à 100 nm.

3. Utilisation de pigments d'interférences selon la revendication 1 ou 2, caractérisé en ce que le pigment d'interférence présente deux couches.

4. Utilisation de pigments d'interférences selon l'une quelconque des revendications 1 à 3, caractérisé en ce qu'on les utilise en combinaison avec des pigments colorés dispersants ou avec des pigments blancs dispersants.

5. Utilisation de pigments d'interférences selon la revendication 4, caractérisé en ce que les pigments colorés dispersants présentent la couleur complémentaire de la couleur de réflexion des pigments d'interférences.

6. Procédé de préparation de pigments d'interférences recouverts d'une couche contenant de l'ilménite par dépôt en phase gazeuse, caractérisé en ce que l'on dépose sur les particules de substrat, préalablement recouvertes d'une couche essentiellement constituée de dioxyde de titane, une couche constituée essentiellement de fer par décomposition inerte de fer-carbonyle, puis une couche constituée essentiellement de magnétite par décomposition de fer-carbonyle en présence de vapeur d'eau, et, ensuite, on chauffe les particules de substrat ainsi recouvertes à 700-1000°C dans un gaz inerte, transformant ainsi le fer, la magnétite et le dioxyde de titane en ilménite.

7. Procédé selon la revendication 6, caractérisé en ce que le rapport molaire du fer à la magnétite s'élève à 0,5 : 1 à 1,5 : 1.
